# EUROPÄISCHE PATENTSCHRIFT

(11) **EP 0 498 158 B1**
(45) Veröffentlichungstag und Bekanntmachung des Hinweises auf die Patenterteilung: **03.05.1995**
(21) Anmeldenummer: 92100311.7
(22) Anmeldetag: 10.01.1992
(51) Int. Cl.: H01M 4/76, H01M 4/24

(54) **Galvanisches Element**
Galvanic cell
Cellule galvanique

(30) Priorität: 06.02.1991 DE 4103462
(43) Veröffentlichungstag der Anmeldung: 12.08.1992
(73) Patentinhaber: VARTA Batterie Aktiengesellschaft, D-30405 Hannover (DE)
(72) Erfinder: Riedl, Werner, W-7090 Ellwangen (DE)
(74) Vertreter: Kaiser, Dieter Ralf, Dipl.-Ing.

(56) Entgegenhaltungen:
- EP-A- 0 303 793

## Beschreibung

Die Erfindung betrifft ein galvanisches Element von flacher Bauart, insbesondere eine Knopfzelle, mit einer positiven Elektrode und einer negativen Elektrode, welche als Pulverpreßelektroden in Form von Tabletten eine Umhüllung aus einem flüssigkeitsdurchlässigen metallischen Netzmaterial als Armierung und als Stromableiter besitzen, sowie einem zwischenliegenden elektrolytgetränkten Separator in einem dicht verschlossenen Gehäuse.

Besonders typische Elemente, die von dem vorstehenden Gattungsbegriff umschrieben werden, sind die bekannten gasdichten Ni/Cd-Knopfakkumulatoren. Das Anwendungsgebiet der Erfindung ist aber nicht auf Sekundärelemente beschränkt, sondern erstreckt sich ebenso auf Primärzellen, beispielsweise des alkalischen Systems AgO/Zn, soweit sie flach gebaut sind und vorzugsweise in Knopfzellen Elektroden enthalten, die aus metallnetzarmierten, tablettenförmigen Pulverpreßlingen des jeweiligen Aktivmaterials gebildet sind.

Die Elektrodentabletten werden aus gepulverten, teils granulierten aktiven Rohstoffmassen auf handelsüblichen Tablettierpressen hergestellt. Den aktiven Massen sind gewöhnlich noch Anteile an Metallpulvern oder Kohlenstoff als Leitmittel beigemischt.

Ein der Elektrodenmasse weiterhin zugesetztes Bindemittel, z. B. PTFE-Pulver, erhöht einerseits die Formbeständigkeit der Tablette und verbessert ihre Handhabbarkeit vor allem bei der Montage, beeinflußt andererseits aber wegen seiner hydrophobierenden Wirkung die elektrische Belastbarkeit der Elektrode bei hohen Strömen in ungünstiger Weise.

Binderfreie Elektroden sind demnach förderlich für die Transportvorgänge im Elektrolythaushalt, neigen aber zur Quellung und Abschlammung. Durch eine die Elektrode umhüllende Armierung aus einem Metallgewebenetz, wie sie vor allem von den Elektrodentabletten in Ni/Cd-Knopfzellen bekannt ist, werden diese Mängel noch wirkungsvoller als durch ein Bindemittel unterdrückt. Derartige Umhüllungen übernehmen zusätzlich die Aufgabe der elektronischen Ableitung zum Zellengehäuse.

Der DE-PS 30 36 295 läßt sich eine solche Elektrodeneinfassung in einer neueren Ausführungsform entnehmen. In der Praxis haben sich bei den bekannten Gewebenetzen aus Schuß- und Kettendrähten wiederum andere Nachteile herausgestellt: durch die Überkreuzungen der Schuß- und Kettendrähte ist die Materialdicke an den Knotenpunkten des Maschengitters erhöht, was insbesondere bei dünnen Elektroden einen merklichen Volumen verlust verursacht, weil er nicht durch aktive Elektrodenmasse mit ausnutzbarer Energie kompensiert wird. Die Maschenweite der von den Drähten begrenzten Freiräume ist im Verhältnis zu den Drahtdicken verhältnismäßig klein, entsprechend klein auch die wirksame freie Elektrodenoberfläche. Eine besondere Gefahr bilden die vom Ausstanzen der Gewebezuschnitte für Elektrodenkörbchen und -deckel herrührenden Drahtenden, weil sie dünne Separatorfolien durchdringen und Kurzschlüsse mit der Gegenelektrode verursachen können. Schließlich sind Metallgewebenetze teuer.

Der Erfindung liegt daher die Aufgabe zugrunde, das bekannte Metallgewebe zur schützenden Einfassung des Elektrodenpreßkörpers durch ein besseres metallisches Netzmaterial zu ersetzen. Die Aufgabe wird erfindungsgemäß mit einem galvanischen Element gelöst, wie es im Patentanspruch 1 definiert ist.

Wie sich herausgestellt hat, eignen sich dünne Streckmetallfolien zum Zweck des ''Verpackens" von Pulverpreßelektroden in zumindest gleicher Weise wie die sonst üblichen Metalldrahtgewebenetze. Sie sind zudem kostengünstiger.

Als Ausgangsmaterial kommen glatte Folien oder Endlosbänder aus einem Metall infrage, das sich den möglichen Elektrodenreaktionen in der Zelle gegenüber chemisch inert verhält. Vorzugsweise ist das Metall ein Edelstahl, ein vernickelter Stahl, Nickel oder Kupfer.

Die Dicke dieses Ausgangsmaterials liegt zwischen 0,05 mm und 0,15 mm, vorzugsweise bei ca. 0,1 mm.

Vom Streckmetallhersteller werden Streckgitterfolien aus diesem Material in einer breiten Auswahl hinsichtlich Gittergeometrie und Maschengröße angeboten, so daß bei der Elektrodenfertigung auf ein passendes Umhüllungsmaterial problemlos zurückgegriffen werden kann. Die erfindungsgemäß verwendeten Streckgitterfolien weisen eine Stegbreite von 0,1 mm bis 0,3 mm, vorzugsweise um 0,15 mm auf und können Maschenweiten besitzen, welche die Stegbreite um das 10- bis 15-fache übertreffen, ohne daß die Dicke des Ausgangsmaterials vergrößert werden müßte.

Der Grad der Verstreckung bzw. Reckung läßt sich mit den maschinenabhängigen Fertigungstechniken beliebig vorgeben. Die Formen der Messer und die Versetzungen ihrer Einschnitte in die Ausgangsfolie sind dabei mitbestimmend für die Geometrie der Zwischenräume bzw. Gittermaschen.

So können sich bei starken Verstreckungen honigwabenähnliche Gittermaschen mit hochgestellten, fast senkrecht zur Gitterebene stehenden Stegen ausbilden. Der Öffnungsgrad eines solchen Streckgitters ist optimal, andererseits aber sein Volumenanspruch am größten. Sehr viele Streckmetalle zeigen ein Rautenmuster. Rautenförmige Maschen sind bei den erfindungsgemäß verwendeten Streckgitterfolien bevorzugt. Mit wachsendem Verstreckungsgrad nähert sich die Rautenform immer mehr dem Quadrat an. Parallel damit gehen ein größerer Öffnungsgrad des Gitters und ein geringerer Materialaufwand. Die starke Verwindung der Stege bedingt eine gewisse Starrheit der Streckgitterfolie, was einen günstigen Einfluß auf die mechanische Festigkeit der Elektrodenoberfläche hat. Durch Nachwalzen der Streckgitterfolie lassen sich die Stege wegen des dünnen Materials aber auch flachdrücken, so daß der Volumenverlust der Elektrode bei dieser Umhüllung minimal ist.

Es ist danach möglich, eine Streckgitterfolie, je nachdem wie es die Konsistenz des einzuhüllenden, aus Pulver gepreßten Aktivmaterials verlangt, in den verschiedensten Varianten verfügbar zu machen. Steht beispielsweise der Wunsch nach hoher Strombelastbarkeit im Vordergrund, wird man wegen des geringen Bedeckungsgrades ein möglichst weitmaschiges Streckmetall wählen. Ist dagegen hohe mechanische Festigkeit der Elektrode gefragt, wird man einem Gitter mit starkem Profil den Vorzug geben und dafür ein größeres Totvolumen in Kauf nehmen. Zwischen diesen Forderungen und dem allgemeinen Wunsch, den Volumenauftrag des elektrochemisch nicht nutzbaren Umhüllungsmaterials minimal zu halten, bieten sich also bei der erfindungsgemäßen Verwendung von Streckgitterfolien genügend Kompromisse an.

Die Verpackung von Pulverpreßelektroden für Knopfzellen mittels Streckgitterfolien gemäß der Erfindung geschieht analog der Vorgehensweise bei den bekannten Armierungen aus Nickelgewebe. Es werden Ronden aus einer Streckgitterfolie ausgestanzt, zu Körbchen verformt und in diese die Elektrodentabletten eingelegt. Mit weiteren Ronden, die dem Innendurchmesser der Körbchen entsprechen, werden die Tabletten abgedeckt und die überstehenden Ränder der Körbchen über den Abdeckronden umgeschlagen. Ein Nachpressen dieser Anordnung zwischen einem Stempel und einer Matrize gibt der Elektrode die endgültige Form und Größe. Eine andere Verschlußtechnik kann in Anlehnung an das in der DE-PS 30 36 295 offenbarte Verfahren darin bestehen, daß aus dem gestreckten Folienmaterial ein Becher so herausgestanzt wird, daß der Schließungsrand des Bechers sich von der Seitenwand radial nach auswärts erstreckt und einen ebenen Kragen bildet.

Nach Einsetzen der Tablette in den Becher wird eine gestanzte Abdeckronde aus dem gleichen Folienmaterial, jedoch von solcher Größe aufgelegt, daß sie mit dem Kragen des Bechers einen gemeinsamen Schließungsrand bildet. Durch Abbiegen der Ränder um 90 ° gegen den Bechermantel werden sie miteinander verfalzt.

Zwei Figuren sollen den Erfindungsgegenstand verdeutlichen.

Figur 1 zeigt ein galvanisches Element gemäß der Erfindung im Aufriß.

Figur 2 zeigt Ausschnitte aus zwei Streckgitterfolien mit erfindungsgemäß bevorzugten Rautenformen.

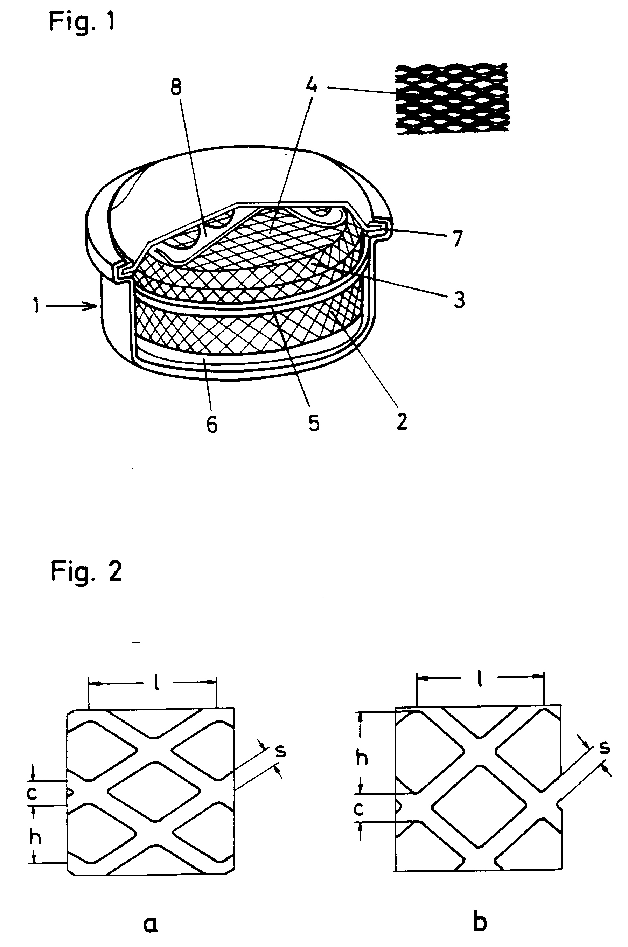

Bei der in Figur 1 als Beispiel gewählten Ni/Cd-Knopfzelle 1 besitzt sowohl die positive Elektrode 2 als auch die negative Elektrode 3 eine Umhüllung aus einer metallischen Streckgitterfolie 4. Das Streckmetall muß in bezug auf die Elektrodenvorgänge chemisch inert sein; es besteht in diesem Falle vorzugsweise aus Nickel.

Mit 5 ist ein Separator, mit 6 eine Bodeneinlage, mit 7 ein Dichtungsring und mit 8 eine Kontaktfeder bezeichnet.

Figur 2 gibt Ausschnitte aus zwei zur erfindungsgemäßen Elektrodenumhüllung geeigneten Streckmetallfolien a, b in einer ca. 20-fachen Vergrößerung wieder. Die hier flach gewalzten Streckgitter unterscheiden sich lediglich durch die lichte Höhe h der rautenförmigen Maschen. So gilt für Streckgitter a: h = 0,7 mm; für Streckgitter b: h = 1,0 mm.

Die übrigen charakteristischen Abmessungen sind die gleichen: Stegbreite s = 0,15 mm; Breite der Vernetzungsstellen der Maschen c = 0,3 mm; Maschenlänge l = 1,5 mm.

Das Streckgitter b mit annähernd quadratischen Maschen ist besonders bevorzugt. Die Maschenweite (lichte Höhe h) ist hier um das 6-fache größer als die Stegbreite s.

Die Vorteile einer Elektrodenarmierung mittels Streckgitterfolien gegenüber einer herkömmlichen aus Metallgewebenetzen werden allein daraus deutlich, daß bei den letzteren die Maschenweite der zwischen den Drähten befindlichen Hohlräume nur das 2- bis 5-fache der Drahtdicke erreicht, welche bei den infrage kommenden Geweben 0,05 bis 0,3 mm beträgt. Dabei engt der Querschnitt der Gewebedrähte die wirksame freie Elektrodenoberfläche stärker ein als dies bei den schräg stehenden Streckmetallstegen mit einer Materialdicke von 0,05 mm bis 0,15 mm im allgemeinen der Fall ist.

Streckmetallfolien sind nicht mit dem Nachteil unabänderlicher doppelter Drahtlagen in den Maschenbegrenzungen bei Drahtgeweben behaftet, weniger materialintensiv und in der Herstellung billiger.

## Patentansprüche

1. Galvanisches Element von flacher Bauart, insbesondere eine Knopfzelle, mit einer positiven und einer negativen Elektrode, welche als Pulverpreßelektroden in Form von Tabletten eine Umhüllung aus einem flüssigkeitsdurchlässigen metallischen Netzmaterial als Armierung und als Stromableiter besitzen, sowie einem zwischenliegenden elektrolytgetränkten Separator in einem dicht verschlossenen Gehäuse, dadurch gekennzeichnet, daß das Netzmaterial eine Streckgitterfolie (4) ist.

2. Galvanisches Element nach Anspruch 1, dadurch gekennzeichnet, daß das der Streckgitterfolie zugrundeliegende Metall ein an den elektrochemischen Elektrodenvorgängen unbeteiligtes Metall, vorzugsweise ein rostfreier Stahl, Nickel oder ein vernickelter Stahl ist.

3. Galvanisches Element nach den Ansprüchen 1 und 2, dadurch gekennzeichnet, daß die Streckgitterfolie aus einem Folienmaterial oder Endlosband der Dicke 0,05 mm bis 0,15 mm, vorzugsweise 0,1 mm hergestellt ist.

4. Galvanisches Element nach Anspruch 3, dadurch gekennzeichnet, daß das Streckmuster der Streckgitterfolie rautenförmig ist.

5. Galvanisches Element nach Anspruch 4, dadurch gekennzeichnet, daß die Stegbreite s des Gitters 0,1 mm bis 0,3 mm, vorzugsweise 0,15 mm beträgt und die lichte Höhe h der rautenförmigen Gittermasche (kürzere Rautendiagonale) 1- bis 6-fach größer als die Stegbreite ist.

6. Galvanisches Element nach Anspruch 5, dadurch gekennzeichnet, daß die kürzere Rautendiagonale etwa 1 mm beträgt, wobei die Rautenform einem Quadrat nahekommt.

## Claims

1. Galvanic cell of flat construction, in particular a button cell, having a positive and a negative electrode which, as pressed powder electrodes in the form of pellets, have a covering comprising a liquid-permeable metal mesh material as a reinforcement and as a current collector, and having an interposed electrolyte-impregnated separator in a tightly sealed housing, characterized in that the mesh material is an expanded mesh foil (4).

2. Galvanic cell according to Claim 1, characterized in that the metal on which the expanded mesh foil is based is a metal which does not take part in the electrochemical electrode processes, preferably a stainless steel, nickel or a nickel-plated steel.

3. Galvanic cell according to Claims 1 and 2, characterized in that the expanded mesh foil is produced from a foil material or endless strip which is 0.05 mm to 0.15 mm, preferably 0.1 mm, thick.

4. Galvanic cell according to Claim 3, characterized in that the pattern of the expanded mesh of the expanded mesh foil is in the shape of a lozenge.

5. Galvanic cell according to Claim 4, characterized in that the web width s of the mesh is 0.1 mm to 0.3 mm, preferably 0.15 mm, and the height clearance h of the lozenge-shaped mesh opening (shorter diagonal of the lozenge) is 1 to 6 times larger than the web width.

6. Galvanic cell according to Claim 5, characterized in that the shorter diagonal of the lozenge is approximately 1 mm, the shape of the lozenge being close to a square.

## Revendications

1. Elément galvanique plat, notamment cellule bouton avec une électrode positive et une électrode négative, électrode en poudre compressée qui comporte comme armature une enveloppe en forme de tablette composée d'un matériau constituant un filet métallique perméable au liquide et comme conducteur de courant, ainsi qu'un séparateur intermédiaire imprégné d'électrolyte dans un boîtier fermé de manière étanche, caractérisé en ce que le matériau constituant le filet est une feuille de métal déployé.

2. Elément galvanique selon la revendication 1, caractérisé en ce que le métal constituant la feuille de métal déployé est un métal qui ne participe pas au processus des électrodes, de préférence un acier inoxydable, du nickel ou un acier nickelé.

3. Elément galvanique selon les revendications 1 et 2, caractérisé en ce que la feuille de métal déployé est réalisée à partir d'une feuille de matériau ou d'une bande sans fin d'une épaisseur de 0,05 mm à 0,15 mm, de préférence 0,1 mm.

4. Elément galvanique selon la revendication 3, caractérisé en ce que le modèle de déploiement de la feuille de métal déployé est en losange.

5. Elément galvanique selon la revendication 4, caractérisé en ce que la largeur de la branche S du grillage s'élève de 0,1 mm à 0,3 mm, de préférence 0,15 mm et la hauteur libre h de la maille en losange (petite diagonale du losange) est 1 à 6 fois plus grande que la largeur de la branche.

6. Elément galvanique selon la revendication 5, caractérisé en ce que la petite diagonale du losange est environ de 1 mm, la forme du losange approchant celle d'un carré.
